(19) Europäisches Patentamt
European Patent Office
Office européen des brevets

(11) **EP 2 472 997 A1**

(12) **EUROPEAN PATENT APPLICATION**
published in accordance with Art. 153(4) EPC

(43) Date of publication:
**04.07.2012 Bulletin 2012/27**

(51) Int Cl.:
**H04W 88/04** (2009.01)

(21) Application number: **10854934.6**

(22) Date of filing: **12.11.2010**

(86) International application number:
**PCT/CN2010/078687**

(87) International publication number:
**WO 2012/009904 (26.01.2012 Gazette 2012/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.07.2010 CN 201010238732**

(71) Applicant: **ZTE Corporation**
**Shenzhen, Guangdong 518057 (CN)**

(72) Inventors:
• **HUANG, Lianfang**
**Guangdong 518057 (CN)**

• **LIU, Yang**
**Guangdong 518057 (CN)**
• **FANG, Wen**
**Guangdong 518057 (CN)**

(74) Representative: **Deambrogi, Edgardo et al**
**Jacobacci & Partners S.p.A.**
**Corso Emilia 8**
**10152 Torino (IT)**

(54) **MOBILE TERMINAL REMOTE CONTROL METHOD AND MOBILE TERMINAL**

(57)   The present invention discloses a method for remotely controlling a mobile terminal and a mobile terminal, wherein the method comprises: receiving, by a first mobile terminal, a touch-screen operation to an interface to be controlled, wherein the interface to be controlled is sent by a second mobile terminal during a video call, and acquiring a first touch-screen coordinate of the operation; converting, by the first mobile terminal, the first touch-screen coordinate into an interface coordinate of the interface to be controlled; and sending, by the first mobile terminal, the interface coordinate to the second mobile terminal to control the interface to be controlled. By way of the present invention, the effect of remotely controlling mobile terminals is achieved, and the application of assisting others to solve problems or sharing a mobile terminal with others via videophones is achieved, which greatly enriches the contents of videophones and provides wider application space for the business application of videophones.

a first mobile terminal receives a touch-screen operation to an interface to be controlled, wherein the interface to be controlled is sent by a second mobile terminal during a video call, and the first mobile terminal acquires a first touch-screen coordinate of this operation — S102

the first mobile terminal converts the first touch-screen coordinate into an interface coordinate of the interface to be controlled — S104

the first mobile terminal sends the interface coordinate to the second mobile terminal to control the interface to be controlled — S106

**Fig.3**

**Description**

**Field of the Invention**

The present invention relates to the communication field, and in particular to a method for remotely controlling a mobile terminal and a mobile terminal.

**Background of the Invention**

With the rapid development of mobile multimedia services and the gradual business application of 3G domestically, the videophone service, which has been developed and applied in the personal communication field rapidly, becomes the landmark service of 3G. The Videophone service is a point-to-point video communication service, which can make use of the telephone network to transmit the images and voice signals of the call parties bi-directionally and in real time. The video terminals can achieve an effect of face-to-face communication and realize the dream of "hear the voice and also see the people" when calling.

However, when this new function of videophone is used, the following situations such as: the users do not know how to use one certain function of the mobile terminal and need the assistance of others; or the terminal cannot be used normally and needs the assistance of others to analyze the reason; or it is desired to share the contents in this terminal with other users during calling, may also often appear in practical application.

As to the above situations, a video terminal and a method for achieving the share of interface contents thereof are provided in the related art. According to the method, a switch unit and an interface content processing unit are set in the video terminal, wherein the switch unit is used for receiving the switch instructions from the outside and selecting to acquire video data by a viewfinder or acquire cache data by an LCD data display cache area to collect sending data; and the interface content processing unit is used for processing the data from the LCD data display cache area and converting the same to the data which complies with the encoding input format requirements and outputting the same. During the video call, the real-time share of the terminal interface contents during video call is achieved in manner of the data transmission of video call through the switch requirements of the user and the interface content processing unit. Herein, the terminal which initiates the share is defined as a second terminal, and the other party is a first terminal. In this method, although the first terminal can share the current interface contents of the second terminal, the first terminal can only accept the current interface of the second terminal passively but cannot operate the current interface actively, such as switch the interface actively and so on. Therefore, the remote coordination control demands of the users still cannot be satisfied.

**Summary of the Invention**

According to the present invention, a method for remotely controlling a mobile terminal and a mobile terminal are provided to solve the above problem that the remote coordination control demands of the users cannot be satisfied by the video mobile terminal.

According to one aspect of the present invention, a method for remotely controlling a mobile terminal is provided, wherein the method comprises: receiving, by a first mobile terminal, a touch-screen operation to an interface to be controlled, wherein the interface to be controlled is sent by a second mobile terminal during a video call, and acquiring a first touch-screen coordinate of the operation; converting, by the first mobile terminal, the first touch-screen coordinate into an interface coordinate of the interface to be controlled; and sending, by the first mobile terminal, the interface coordinate to the second mobile terminal to control the interface to be controlled.

Furthermore, this method for remotely controlling a mobile terminal further comprises: receiving, by the second mobile terminal, the interface coordinate; converting the interface coordinate into a second touch-screen coordinate of the second mobile terminal; and performing operation control to the interface to be controlled according to the second touch-screen coordinate.

Furthermore, the step of converting, by the first mobile terminal, the first touch-screen coordinate into an interface coordinate of the interface to be controlled comprises: converting, by the first mobile terminal, the first touch-screen coordinate into the interface coordinate of the interface to be controlled according to the first touch-screen coordinate, a resolution of a touch screen of the first mobile terminal, and a video resolution of the first mobile terminal.

Furthermore, the step of sending, by the first mobile terminal, the interface coordinate to the second mobile terminal comprises: encapsulating, by the first mobile terminal, the interface coordinate into a coordinate message of the H.245 protocol, wherein the coordinate message is used for transmitting the information of the interface coordinate; and sending the coordinate message to the second mobile terminal.

Furthermore, before the step of receiving, by the first mobile terminal, a touch-screen operation to the interface to be controlled sent by a second mobile terminal during a video call, the method further comprises: performing, by the first mobile terminal and the second mobile terminal, touch-screen information transfer capability exchange using the H.245 protocol, wherein the touch-screen information transfer capability is used for supporting the first mobile terminal and the second mobile terminal to transfer the interface coordinate information; and confirming that both the first mobile terminal and the second mobile terminal support the touch-screen information transfer capability.

According to another aspect of the present invention, a mobile terminal is provided, wherein the mobile terminal comprises: an acquiring module, configured to receive a touch-screen operation to an interface to be controlled, wherein the interface to be controlled is sent by the other mobile terminal during a video call, and acquiring a first touch-screen coordinate of the operation; a first converting module, configured to convert the first touch-screen coordinate into a first interface coordinate of the interface to be controlled; and a first control module, configured to send the first interface coordinate to the other mobile terminal to control the interface to be controlled.

Furthermore, this mobile terminal further comprises: a receiving module, configured to receive a second interface coordinate sent by the other mobile terminal; a second converting module, configured to convert the second interface coordinate into a second touch-screen coordinate; and a second control module, configured to perform operation control to the interface to be controlled of the mobile terminal according to the second touch-screen coordinate.

Furthermore, the first converting module is configured to convert the first touch-screen coordinate into the first interface coordinate of the interface to be controlled according to the first touch-screen coordinate, a resolution of a touch screen of the mobile terminal and a video resolution of the mobile terminal.

Furthermore, the first control module comprises: an encapsulating module, configured to encapsulate the first interface coordinate into a coordinate message of the H.245 protocol, wherein the coordinate message is used for transferring the information of the interface coordinate; and a sending module, configured to send the coordinate message to the other mobile terminal to control the interface to be controlled of the other mobile terminal.

Furthermore, this mobile terminal further comprises: an exchange module, configured to perform touch-screen information transfer capability exchange with another mobile terminal using the H.245 protocol, wherein the touch-screen information transfer capability is used for supporting the mobile terminal and the other mobile terminal to transfer interface coordinate information; and a confirmation module, configured to confirm that both the first mobile terminal and the second mobile terminal support the touch-screen information transfer capability.

By way of the present invention, the problem in the related art that the video mobile terminal cannot meet the remote coordination control demand of the users is solved by using a first mobile terminal to perform operation control to the application interface of a second mobile terminal via a videophone and a touch screen, the effect of remotely controlling mobile terminals is achieved, and the application of assisting others to solve problems or sharing a mobile terminal with others via videophones is achieved, which greatly enriches the contents of videophones and provides wider application space for the business application of videophones.

**Brief Description of the Drawings**

The drawings illustrated here provide a further understanding of the present invention and form a part of the present application. The exemplary embodiments and the description thereof are used to explain the present invention without unduly limiting the present invention, wherein:

Fig. 1 is a schematic diagram of the data structure of a capability set according to an embodiment of the present invention;
Fig. 2 is a schematic diagram of a capability format according to an embodiment of the present invention;
Fig. 3 is a flow chart of the steps of a method for remotely controlling a mobile terminal according to Embodiment I of the present invention;
Fig. 4 is a flow chart of the steps of a method for remotely controlling a mobile terminal according to Embodiment II of the present invention;
Fig. 5 is a flow chart of the steps of a method for remotely controlling a mobile terminal according to Embodiment III of the present invention;
Fig. 6 is a schematic diagram of a coordinate transfer and conversion process according to an embodiment of the present invention;
Fig. 7 is a flow chart of the steps of a method for remotely controlling a mobile terminal according to Embodiment IV of the present invention;
Fig. 8 is a flow chart of the steps of a method for remotely controlling a mobile terminal according to Embodiment V of the present invention;
Fig. 9 is a structural block diagram of a mobile terminal according to Embodiment VI of the present invention;
Fig. 10 is a structural block diagram of mobile terminals according to Embodiment VII of the present invention; and
Fig. 11 is a flow chart of the steps of applying the mobile terminals shown in Fig. 10 to perform remote control.

**Detailed Description of the Embodiments**

The embodiments of the present invention will be described hereinafter in detail in conjunction with the drawings thereof. It needs to be noted that the embodiments of the present application and the features in the embodiments can be combined with each other if no conflict exists.

All the mobile terminals related in the embodiments of the present invention support videophone and are touch-screen mobile terminals.

In the mobile videophone field, the most common communication protocol is the H.324 protocol set, which includes the H.223 multiplexing protocol, the H.245 system control protocol, the H.263 video encoding protocol, the G.723.1 audio encoding protocol and so on. The method of a video mobile terminal performing remote control and the video mobile terminal according to the embodiments of the present invention are based on the H.324 video communication protocol and make certain supplement to the H.245 control protocol to achieve remote control.

The H.245 protocol is a control signaling protocol and mainly used for the end-to-end H.245 information exchange between terminals which are communicating. In the H.245 protocol, the capability exchange process is a process which needs to be firstly carried out after the establishment of H.245 call, the objective of which is to ensure that the sent multimedia signals can be received and encoded by a terminal. The terminal enables the other side to know the capability combination which the terminal can receive by sending its "capability set". The other side does not have to understand all these capabilities, and the other side only needs to store the capability portion which can be understood and may be used so as to facilitate the other side to establish a logic channel.

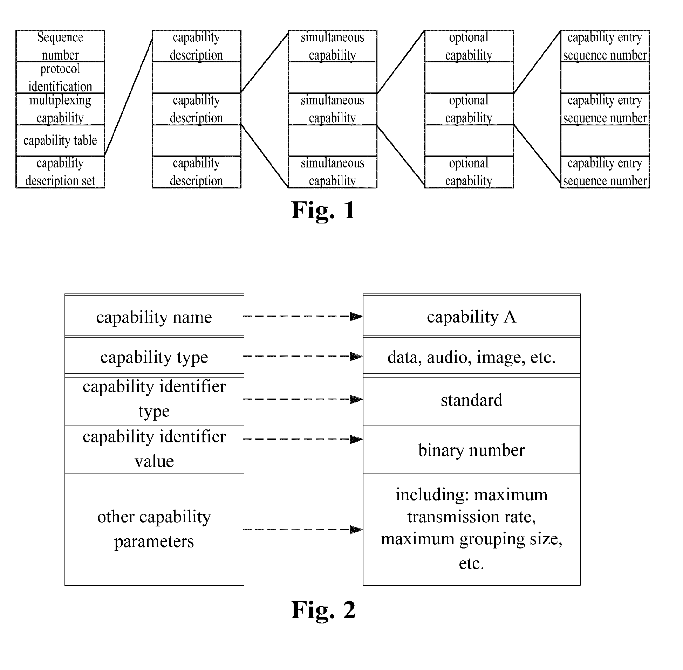

The terminal capability set contains a capability table in a message, wherein the table lists all the operation modes allowed by the terminal and each mode is assigned with a corresponding sequence number (capability number). Several capability numbers consist of a "selectable capability set" structure, which describes a media channel capability of the terminal and indicates that the terminal can work based on any mode therein. Several "selectable capability set" consist of a "simultaneous capability" structure, which indicates that this terminal can use a set of capabilities to work simultaneously. At last, several "simultaneous capability" can further consist of a "capability description set" structure, which contains a set of capability descriptions, with each description consisted of a simultaneous capability and a capability description sequence number. This data structure gives the total capability of the terminal, the particular data structure of which is as shown in Fig. 1.

I n the present invention, the characteristics of the above H.245 protocol are used and new capabilities are defined in the H.245 capability set: touch-screen information transfer capability, which supports the call parties to transfer coordinate information; and new message types are defined in the H.245 protocol, i.e. coordinate message, so as to enable the terminals which have touch-screen information transfer capability to send, receive, and feed back the coordinate information.

In particular, the new touch-screen information transfer capability defined in the H.245 is as follows:

H.245 uses ASN.1 (Abstract Syntax Notation 1) standard to define its own message structure, the message data of which uses binary encoding based on PER (Packed Encoding Rule) rule. The above capability definition format in the embodiments of the present invention is as shown in Fig. 2.

According to the above capability format, the new coordinate message defined in the H.245 protocol of the embodiments of the present invention is as follows:

the representation mode of coordinate message format and that of ordinary messages are consistent, and the difference only lies in the type field in the message (the corresponding type is "coordinate information") which is used for differentiating from other message types. In addition, the coordinate location information is converted into data which complies with the encoding input format requirements and outputted and delivered in the videophone.

The mobile terminal initiates an operation (such as click to select and pull) using the touch screen via the touch point coordinate information, and transfers the coordinate information during the video call using the new touch-screen information transfer capability and the coordinate message defined in H.245 to remotely control another mobile terminal, thus greatly facilitating the use of users, meeting the demand of users to perform remote cooperation control, and also accelerating the popularization of video terminals.

All the mobile terminals in the following embodiments of the present invention can use the above improved H.245 protocol.

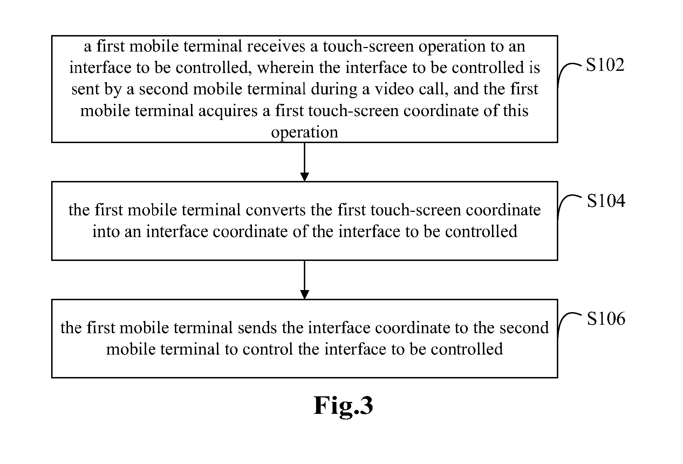

Referring to Fig. 3, it shows a flow chart of the steps of a method for remotely controlling a mobile terminal according to Embodiment I of the present invention, and the method comprises the following steps.

Step S102: a first mobile terminal receives a touch-screen operation of an interface to be controlled, wherein the interface to be controlled is sent by a second mobile terminal during a video call, and the first mobile terminal acquires a first touch-screen coordinate of this operation.

In this step, when the first mobile terminal receives the application interface to be controlled of the second mobile terminal sent by the second mobile terminal during the video call, the user of the first mobile terminal performs operation to this application interface using a touch screen, such as click or pull, etc., so as to achieve the remote control of a corresponding application interface on the second mobile terminal. At this moment, the first mobile terminal acquires the coordinate when the user performs operation to the touch screen, i.e. the first touch-screen coordinate. If this operation is the click operation, then the touch-screen coordinate of the click point can be only acquired, and if this operation is the pull operation, then the touch-screen coordinates of the starting touch point and the ending touch point can be acquired, or the touch-screen coordinates of the middle touch points during the pull can be further included.

Step S104: the first mobile terminal converts the first touch-screen coordinate into an interface coordinate of the interface to be controlled.

In this step, since the coordinate origin and the coordinate range of the touch screen may be different from those of the interface to be controlled, it needs to convert the touch-screen coordinate into the interface coordinate of the interface to be controlled.

Step S106: the first mobile terminal sends the interface coordinate to the second mobile terminal to control the interface to be controlled.

In this step, the first mobile terminal can send the interface coordinate to the second mobile terminal to perform remote control to the interface to be controlled by the touch-screen information transfer capability and coordinate message newly defined by the H.245 protocol. Of course, this embodiment is not limited to the H.245 protocol, and any protocol or message which can send the interface coordinate to the second mobile terminal can achieve the solution of this embodiment, which is not limited by the present invention.

In the related art, the first mobile terminal can only accept the current interface contents of the second mobile terminal passively, and cannot perform operation to it actively, which cannot meet the remote cooperation control demand of the users. By way of this embodiment, the first mobile terminal uses the touch screen to operate the interface to be controlled of the second mobile terminal and converts the coordinate operated by the touch screen into the interface coordinate of the interface to be controlled and sends it to the second mobile terminal, and the second mobile terminal performs corresponding operations according to the received coordinate, thus achieving the remote control of the second mobile terminal by the first mobile terminal and meeting the remote cooperation control demand of the users.

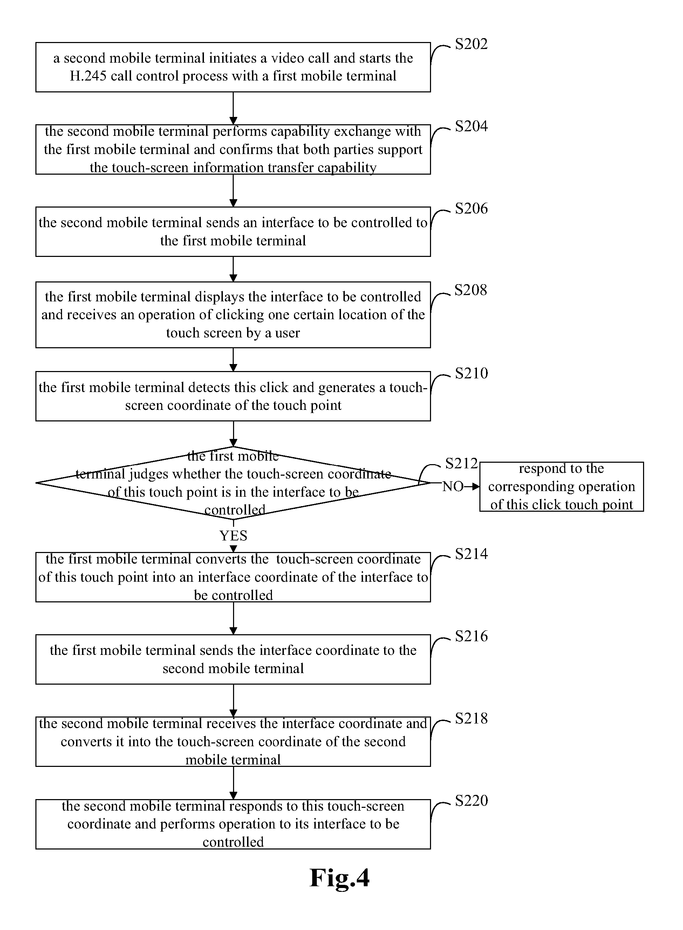

Referring to Fig. 4, it shows a flow chart of the steps of a method for remotely controlling a mobile terminal according to Embodiment II of the present invention, wherein the method comprises the following steps

Step S202: a second mobile terminal initiates a video call and starts the H.245 call control process with a first mobile terminal

Step S204: the second mobile terminal performs capability exchange with the first mobile terminal and confirms that both parties support the touch-screen information transfer capability.

The above capability exchange process can be initiated by the first mobile terminal during the video call. The capability exchange with the second mobile terminal is performed, and that both parties support the touch-screen information transfer capability is confirmed.

Step S206: the second mobile terminal sends an interface to be controlled to the first mobile terminal.

In this embodiment, taking the desktop interface of the second mobile terminal as an interface to be controlled for example, the second mobile terminal sends its desktop interface to the first mobile terminal.

Step S208: the first mobile terminal displays the interface to be controlled and receives an operation of clicking one certain location of the touch screen by a user.

In this embodiment, taking clicking the short message folder location on the desktop interface for example, the user of the first mobile terminal clicks the corresponding location of the short message folder on the desktop interface sent by the second mobile terminal via the touch screen.

Step S210: the first mobile terminal detects this click and generates a touch-screen coordinate of the touch point.

In this step, the first mobile terminal detects the location of the short message folder on the desktop interface clicked by the user and generates the touch-screen coordinate of this location.

Step S212: the first mobile terminal judges whether the touch-screen coordinate of this touch point is in the interface to be controlled. If yes, then perform step S214; otherwise, then judge that this click is an operation to this mobile terminal, and respond to a corresponding operation of this click touch point.

This step is an optional step, especially when the range of the interface to be controlled and that of the touch screen interface are the same.

Step S214: the first mobile terminal converts the touch-screen coordinate of this touch point into an interface coordinate of the interface to be controlled.

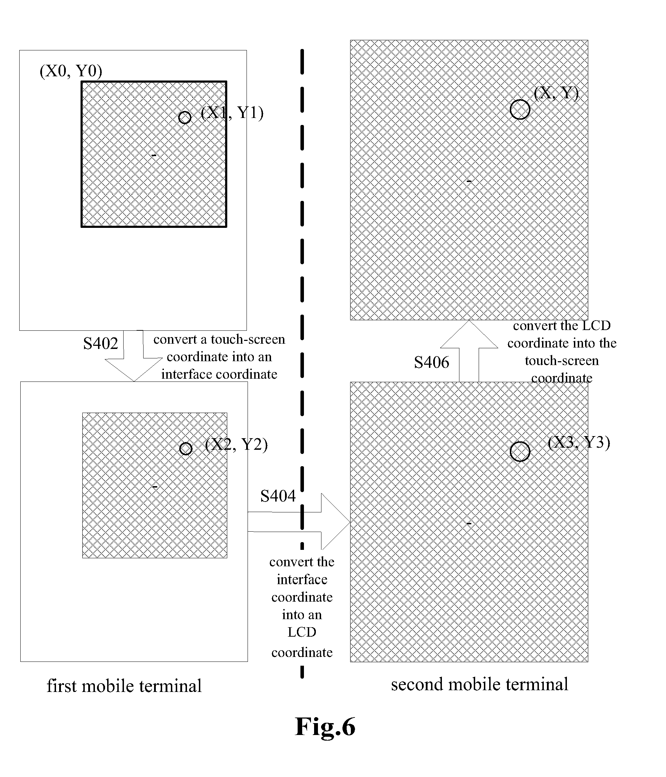

In this step, the first mobile terminal converts this touch-screen coordinate into the coordinate of the short message folder in the desktop interface according to this touch-screen coordinate, the video resolution of the first mobile terminal, and the touch-screen resolution of the first mobile terminal. The particular conversion process can be performed by reference to the coordinate transfer and conversion shown in Fig. 6, which will not be described here redundantly.

Step S216: the first mobile terminal sends the interface coordinate to the second mobile terminal.

In this step, the first mobile terminal sends the interface coordinate to the second mobile terminal via a coordinate message of H.245.

Step S218: the second mobile terminal receives the interface coordinate and converts it to be the touch-screen coordinate of the second mobile terminal.

In this step, the second mobile terminal converts the interface coordinate into the touch-screen coordinate of the second mobile terminal according to the interface coordinate, the video resolution of the second mobile terminal, and the touch-screen resolution of the second mobile terminal.

Step S220: the second mobile terminal responds to this touch-screen coordinate and performs operations to its interface to be controlled.

In this step, the second mobile terminal performs corresponding click operation to the short message folder corresponding to this touch-screen coordinate on the desktop interface in response to this touch-screen coordinate according to the touch-screen coordinate converted from the interface coordinate.

In this embodiment, the second mobile terminal achieves effective control to its interface to be controlled by receiving the interface coordinate sent by the first mobile terminal and then converting the interface coordinate into its own touch-screen coordinate.

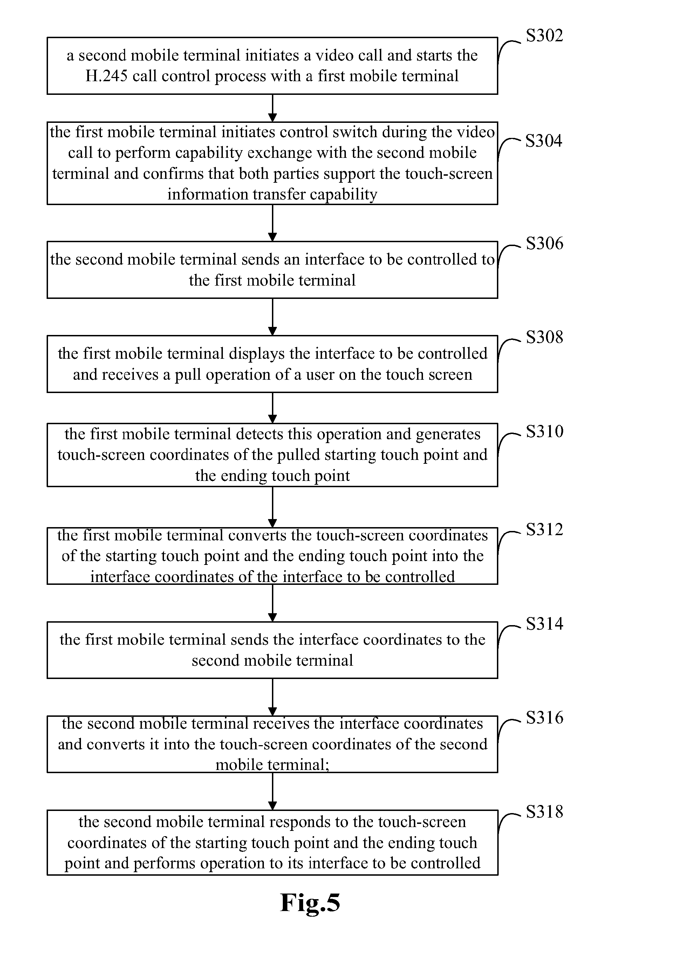

Referring to Fig. 5, it shows a flow chart of the steps of a method for remotely controlling a mobile terminal according to Embodiment III of the present invention, and the method comprises the following steps.

Step S302: a second mobile terminal initiates a video call and starts the H.245 call control process with a first mobile terminal.

Step S304: the first mobile terminal initiates control switch during the video call to perform capability exchange with the second mobile terminal and confirm that both parties support the touch-screen information transfer capability.

Step S306: the second mobile terminal sends an interface to be controlled to the first mobile terminal.

In this embodiment, taking the e-book interface of the second mobile terminal as an interface to be controlled for example, the second mobile terminal sends its e-book interface to the first mobile terminal.

Step S308: the first mobile terminal displays the interface to be controlled and receives a pull operation of a user on the touch screen.

In this embodiment, taking pulling the scrollbar of the e-book interface for example, the user of the first mobile terminal pulls the corresponding location of the vertical or horizontal scrollbar in the e-book interface sent by the second mobile terminal from top to down via the touch screen.

Step S310: the first mobile terminal detects this operation and generates a touch-screen coordinates of the pulled starting touch point and the ending touch point.

In this step, the first mobile terminal detects the touch-screen operation of the user, judges that this operation type is a pull touch-screen operation according to the press time, and generates the touch-screen coordinates of the pulled starting touch point and the ending touch point. The generated touch-screen coordinates can further include one to more touch point coordinates of the middle touch point during the pull so as to improve the accuracy of the pull operation.

Step S312: the first mobile terminal converts the touch-screen coordinates of the starting touch point and the ending touch point into the interface coordinates of the interface to be controlled.

In this step, the first mobile terminal converts the touch-screen coordinates of the starting touch point and the ending touch point into coordinates of the starting touch point and the ending touch point in the e-book interface according to the touch-screen coordinates of the starting touch point and the ending touch point, the video resolution of the first mobile terminal, and the touch-screen resolution of the first mobile terminal. The particular conversion process can be performed by reference to the coordinate transfer and conversion shown in Fig. 6, which will not be described here redundantly.

Step S314: the first mobile terminal sends the interface coordinate to the second mobile terminal.

In this step, the first mobile terminal sends the interface coordinate to the second mobile terminal via a coordinate message of H.245.

Step S316: the second mobile terminal receives the interface coordinate and converts it into the touch-screen coordinate of the second mobile terminal.

In this step, the second mobile terminal converts the interface coordinate into the touch-screen coordinates of the starting touch point and the ending touch point corresponding to the second mobile terminal according to the interface coordinate, the video resolution of the second mobile terminal, and the touch-screen resolution of the second mobile terminal.

Step S318: the second mobile terminal responds to the touch-screen coordinates of the starting touch point and the ending touch point and performs operations to its interface to be controlled.

In this step, the second mobile terminal performs pull operation to the e-book interface corresponding to this touch-screen coordinate according to the touch-screen coordinates of the starting touch point and the ending touch point converted from the interface coordinate so as to perform downward page turning view and the like to this e-book.

Referring to Fig. 6, it shows a schematic diagram of a coordinate transfer and conversion process according to the embodiments of the present invention.

The mobile terminal and videophone relates to a plurality of resolutions mainly including: video resolution, such as SQCIF, CIF, and QCIF, which are all common standardized image formats, and in which, SQCIF=128×965 pixels, CIF = 352×288 pixels, QCIF = 176×144 pixels; and LCD resolution which is generally 4*3 ratio, such as 320*240; and touch-screen resolution which can be defined by the terminal itself, such as 900*900.

The final conversion results of the same coordinate under different resolutions are different. As shown Fig. 6, the coordinate transfer and conversion process is as follows:

Step S402: after the user of the first mobile terminal clicks the touch screen, the coordinate of the touch point is touch-screen coordinate, and the coordinate of the touch point needs to be converted into interface coordinate according to the touch-screen resolution and video resolution;

Step S404: since what is displayed in the first mobile terminal is the current application interface of the LCD of the second mobile terminal, this interface coordinate is converted into the LCD coordinate of the second mobile terminal; and

Step S406: the LCD coordinate of the second mobile terminal is converted into the touch-screen coordinate of the second mobile terminal.

The LCD display screen and the touch screen both have their own resolution indexes, which is equivalent to their coordinate systems, assuming that their coordinate systems are (x, y) and (X, Y) respectively. Taking the resolution of the LCD display screen to be 1024*600 for example, its coordinate origin (0, 0) is at the top left corner, the coordinate of the bottom right corner is (1024, 600), while the touch screen also has its own coordinate origin O (this coordinate origin is physical and fixed at one certain location in the screen, and it is very possible that this origin has already been cut away during assembly but it has no effect to coordination determination)

During practical application, two two-dimensional linear coordinate systems are corresponding to each other in manner of sampling, i.e. (X, Y)->(x, y), the particular practice is: (1) the coordinates of the four corners of the LCD screen are used as sampling values (since in the situation that there is no other tools, the definite coordinates of these four points (x1, y1), (x2, y2), (x3, y3), and (x4, y4) are only known); (2) set an input device detection program before running, respectively click the four corners of the LCD, and read out the corresponding touch-screen coordinate values of these points (X1, Y1), (X2, Y2), (X3, Y3), and (X4, Y4) in the program; (3) substitute these four sampling values into the following equations: x=aX+bY+c and y=eX+fY+g; solve 7 coefficients (a, b, c, d, e, f, s) in these equations, and then the correlation of two coordinate systems can be obtained.

The above situation can be used widely and is comprehensive and of high accuracy. However, there are too many unknown numbers to be solved and there are also too many sampling values; and in fact, the current assembly process can totally ensure the phase difference between the two coordinate systems to be an integral multiple of 90 degree, that is, the above correspondence equation can be simplified as the following:

$$\{ x=aX+b, \ y=cY+d\} \ \text{or} \ \{x=aY+b, \ y=cX+d \}$$

Thus, it only needs 2 groups of sampling values to determine the corresponding coefficients.

For example, the LCD resolution is 320*240, and the coordinate origin is at the top left corner; and the touch-screen resolution is 900*900, and the coordinate origin is at the top left corner, then the conversion formula is as follows:

$$xLCD=[320*(x-x2)/(x1-x2)], \ yLCD=[240*(y-y2)/(y1-y2)]$$

If the coordinate origins are inconsistent, for example, the LCD coordinate origin is at the bottom right corner and the touch screen origin is at the top left corner, then it can further perform the following conversion:

$$xLCD=320-[320*(x-x2)/(x1-x2)]$$

$$yLCD=240-[240*(y-y2)/(y1-y2)]$$

Then, the correlation of two coordinate systems is definite, and all touch-screen coordinates are converted into corresponding coordinates in the LCD coordinate system according to this correspondence formula.

Coordination conversion between touch screen and LCD can be achieved according to the above method.

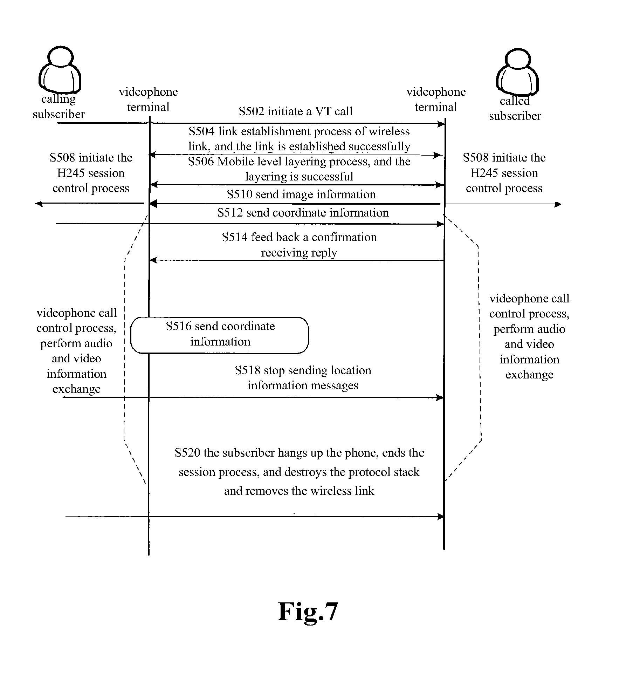

Referring to Fig. 7, it shows a flow chart of the steps of a method for remotely controlling a mobile terminal according to Embodiment IV of the present invention. This embodiment can describe the present invention from the perspective of videophone message transmission protocol procedure, which comprises the following steps.

Step S502: a calling subscriber initiates a video call toward a called subscriber.

Step 5504: the calling subscriber and the called subscriber establish a wireless link successfully.

Step S506: the calling subscriber and the called subscriber perform mobile level layering, and both parties negotiate a same mobile level.

In this case, the mobile level mainly describes the audio and video encoding format which both parties can support so as to ensure the terminals of the communication parties to communicate normally.

Step 5508: after the layering succeeds, both parties initiate H.245 call control process, establish a control channel and perform capability exchange.

In this step, both parties exchange the touch-screen information transfer capability newly defined in H.245 to confirm that both parties support the capability of both parties transferring coordinate information in the videophone.

Step S510: the called party initiates a switch instruction and uses the display interface of its current touch screen as an interface to be controlled so as to transfer the picture data or image information to the calling party.

Step S512: the calling party clicks any location in the interface to be controlled, converts the coordinate information of the touch point, and then sends this coordinate information to the called subscriber in manner of H.245 call control protocol. At the same time, the retransmission timer mechanism is initiated. If a response message of the other side has still not been received when the timing is out, then the determining loop delay process in the H.245 protocol is started so as to determine whether the called party is reachable. If unreachable, then this call is given up; and if reachable, then continue the call and send the coordinate information to the called party again.

Step S514: after having received the coordinate information, the called party feeds back to the calling party to confirm the reception.

Step S516: the calling party clicks the videophone call window interface and repeats steps S510 to S514 to enable the called subscriber to respond to the corresponding operations in time.

Step S518: the calling party stops initiating control operations to the called party, and the called party restores the interface display after having received a signal of stopping sending.

Step S520: the calling subscriber hangs up the phone, removes the protocol stack and the wireless link, and the call is over.

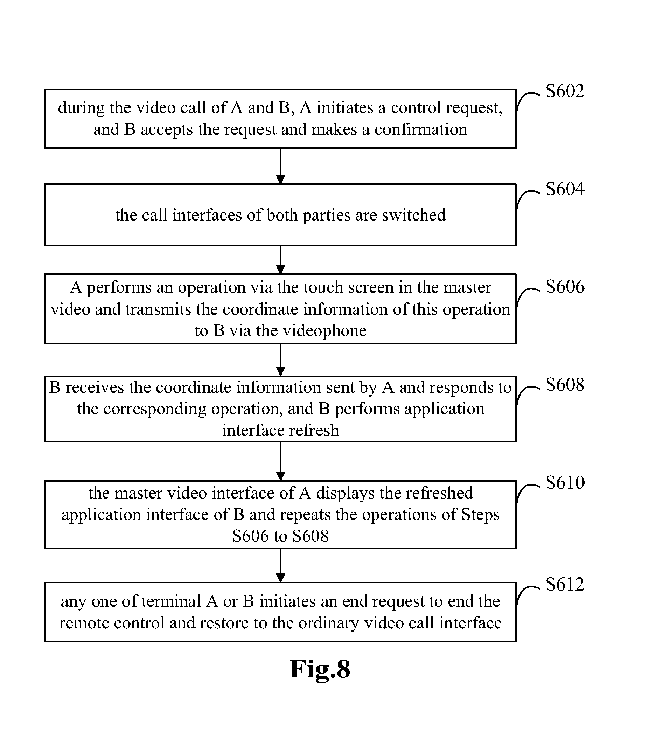

Referring to Fig. 8, it shows a flow chart of the steps of a method for remotely controlling a mobile terminal according to Embodiment V of the present invention. In this embodiment, the parties which communicate with each other are defined as mobile terminals A and B. When it is an ordinary video call, each mobile terminal will display two videos, wherein one is the video or interface of the peer, which is referred to as master video, and the other is the current camera interface of the mobile terminal, which is referred to as auxiliary video.

Step S602: during the video call of A and B, A initiates a control request, and B accepts the request and makes a confirmation.

In this step, the control switch request can also be initiated by B.

Step S604: the call interfaces of both parties are switched.

In this case, the master video of A displays the application interface displayed by the current screen of B. The master video of B displays the camera video of A. At this moment, B needs to set the master video to be displayed at one certain corner with a relatively small size or set it not to be displayed so as to facilitate terminal A to perform remote operation control thereto.

Step S606: A performs an operation via the touch screen in the master video and transmits the coordinate information of this operation to B via the videophone.

Step S608: B receives the coordinate information sent by A and responds to corresponding operations, and B performs application interface refresh.

Step S610: the master video interface of A displays the refreshed application interface of B and repeats the operations of steps S606 to S608.

Step S612: any one of terminal A or B initiates an end request to end the remote control and restore to the ordinary video call interface.

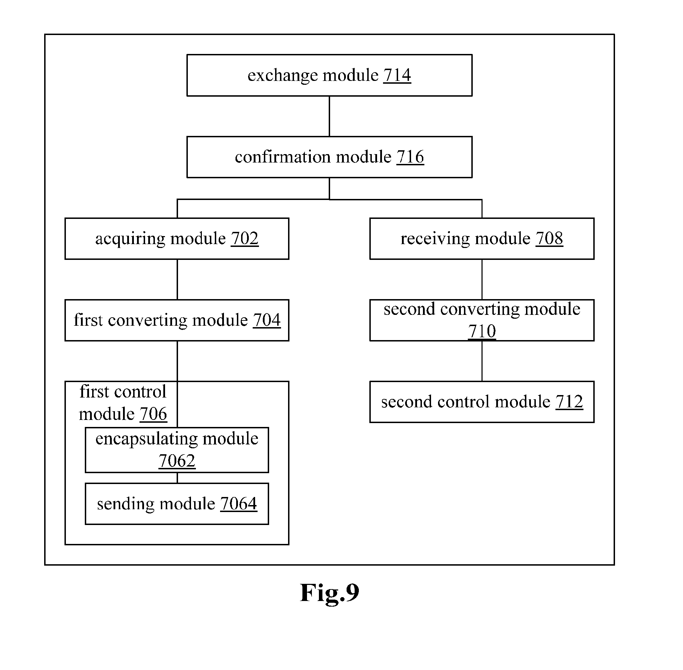

Referring to Fig. 9, it shows a structural block diagram of a mobile terminal according to Embodiment VI of the present invention, which comprises the following modules:

an acquiring module 702, configured to receive a touch-screen operation to an interface to be controlled, wherein the interface to be controlled is sent by another mobile terminal during a video call, and acquire a first touch-screen coordinate of the operation; a first converting module 704, configured to convert the first touch-screen coordinate into a first interface coordinate of the interface to be controlled; and a first control module 706, configured to send the first interface coordinate to the other mobile terminal to control the interface to be controlled.

Preferably, the mobile terminal of this embodiment further comprises: a receiving module 708, configured to receive a second interface coordinate sent by the other mobile terminal; a second converting module 710, configured to convert the second interface coordinate into a second touch-screen coordinate; and a second control module 712, configured to perform operation control to an interface to be controlled of the mobile terminal according to the second touch- screen coordinate.

Preferably, the first converting module 704 is configured to convert the first touch-screen coordinate into the first interface coordinate of the interface to be controlled according to the first touch-screen coordinate, the resolution of the touch screen of the mobile terminal and the video resolution of the mobile terminal.

Preferably, the first control module 706 comprises: an encapsulating module 7062 for encapsulating the first interface coordinate into a coordinate message of the H.245 protocol, wherein the coordinate message is used for transferring the information of the interface coordinate; and a sending module 7064 for sending the coordinate message to the other mobile terminal to control an interface to be controlled of the other mobile terminal.

Preferably, the mobile terminal of this embodiment further comprises: an exchange module 714, configured to perform touch-screen information transfer capability exchange with another mobile terminal using the H.245 protocol, wherein the touch-screen information transfer capability is used for supporting the mobile terminal and the other mobile terminal to transfer interface coordinate information; and a confirmation module 716, configured to confirm that both the mobile terminal and the other mobile terminal support the touch-screen information transfer capability.

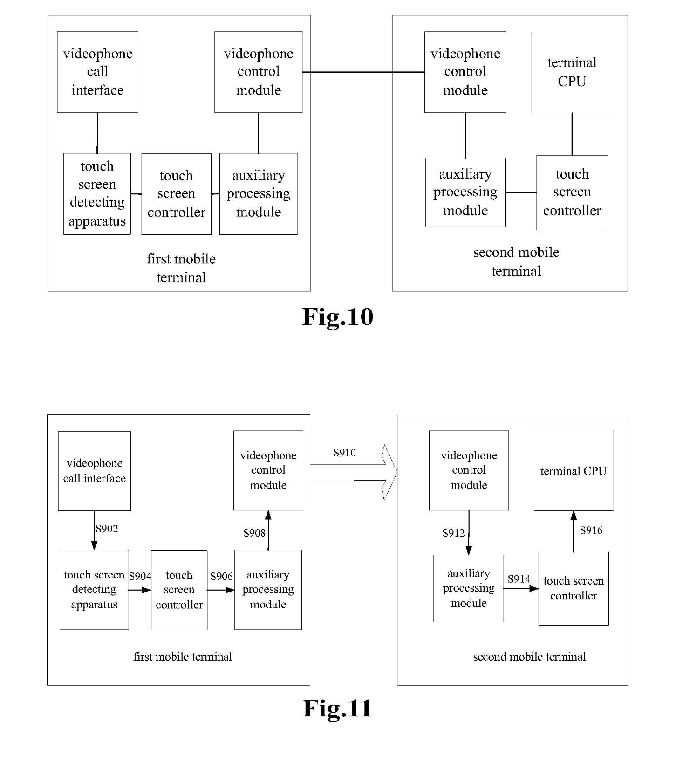

Referring to Fig. 10, it shows a structural schematic diagram of a mobile terminal according to Embodiment VII of the present invention. For the convenience of description, this embodiment arranges the generation portion and sending portion of the interface coordinate on a first mobile terminal and arranges the receiving portion and operation portion of the interface coordinate on a second mobile terminal. However, those skilled in the art should understand that the above first mobile terminal and second mobile terminal can be the same mobile terminal so as to achieve the objective of performing remote control to another mobile terminal and being able to receiving the remote control of another mobile terminal.

In this case, the first mobile terminal includes: a videophone call interface, configured to receive an interface to be controlled sent by the second mobile terminal and use the touch screen of the present mobile terminal to perform operations to this interface to be controlled; a touch screen detecting apparatus (equivalent to the acquiring module), configured to detect the touch-screen operations of the users and generate the touch-screen coordinate of the touch point operated; a touch screen controller, configured to respond to the touch-screen operations of the users of present terminal, send the touch- screen coordinate to an auxiliary processing module, and judge whether the touch point is within the range of the interface to be controlled and the like; the auxiliary processing module (equivalent to the first converting module), configured to convert the touch-screen coordinate into an interface coordinate; a videophone control module (equivalent to the first control module, the exchange module and the confirmation module), configured to perform capability exchange with the second mobile terminal via the H.245 protocol, and transfer the interface coordinate, etc.

In this case, the second mobile terminal includes: a videophone control module (equivalent to the receiving module), configured to perform capability exchange with the second mobile terminal via the H.245 protocol, and receive the interface coordinate, etc.; an auxiliary processing module (equivalent to the second converting module), configured to convert the interface coordinate into a touch-screen coordinate of the present terminal; a touch screen controller (equivalent to the second control module), configured to respond to the remote control operations of the first mobile terminal and the like according to the touch-screen coordinate converted from the interface coordinate; and a terminal CPU, configured to perform control and the like to the touch screen and system.

Referring to Fig. 11, it shows a flow chart of the steps of applying the mobile terminals shown in Fig. 10 to perform remote control, which includes the following steps.

Step S902: the user of the first mobile terminal displays the interface to be controlled sent by the user of the second mobile terminal via the videophone call interface; the user of the first mobile terminal clicks one certain location of the touch screen; and the touch screen detecting apparatus detects this click and generates the coordinate information of the touch point of this click.

Step S904: the touch screen detecting apparatus transfers this coordinate information to the touch screen controller, and the touch screen controller judges whether this touch point is within the interface to be controlled. If yes, then it is judged to perform remote control operations to the second mobile terminal, continue to Step S906, and the touch screen controller performs no operation; and if no, then it is judged to perform operations to the present terminal, and the touch screen controller responds to the corresponding operations on the present terminal.

Step S906: the touch screen controller provides the coordinate information for the auxiliary processing module, and the auxiliary processing module calculates the interface coordinate in the interface to be controlled of the coordinate of this touch point according to this coordinate information, the video resolution, and the touch -screen resolution.

Step S908: the auxiliary processing module of the first mobile terminal provides the interface coordinate to the videophone control module.

Step S910: the videophone module of the first mobile terminal transfers the interface coordinate to the videophone control module via the H.245 protocol.

Step S912: the videophone control module of the second mobile terminal transfers the interface coordinate to the auxiliary processing module of the second mobile terminal, and the auxiliary processing module converts this interface coordinate into the touch-screen coordinate of the second mobile terminal according to this interface coordinate, the LCD resolution, and the touch-screen resolution.

Step S914: the auxiliary processing module of the second mobile terminal transfers the converted touch-screen coordinate to the touch screen controller of the second mobile terminal.

Step S916: the touch screen controller of the second mobile terminal responds to the touch-screen coordinate converted from the interface coordinate to perform corresponding operations.

Apparently, those skilled in the art shall understand that the above modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device, so that consequently they can be stored in the storing device and executed by the calculating device, and in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The protection scope of the present invention shall comprise any modification, equivalent substitution and improvement within the spirit and principle of the present invention.

**Claims**

1. A method for remotely controlling a mobile terminal, **characterized by** comprising:

   receiving, by a first mobile terminal, a touch-screen operation to an interface to be controlled, wherein the interface to be controlled is sent by a second mobile terminal during a video call, and acquiring a first touch-screen coordinate of the operation;
   converting, by the first mobile terminal, the first touch-screen coordinate into an interface coordinate of the interface to be controlled; and
   sending, by the first mobile terminal, the interface coordinate to the second mobile terminal to control the interface to be controlled.

2. The method according to claim 1, **characterized in that** the method further comprises:

   receiving, by the second mobile terminal, the interface coordinate;
   converting the interface coordinate into a second touch-screen coordinate of the second mobile terminal; and
   performing operation control to the interface to be controlled according to the second touch-screen coordinate.

3. The method according to claim 1 or 2, **characterized in that** the step of converting, by the first mobile terminal, the first touch-screen coordinate into the interface coordinate of the interface to be controlled comprises:

   converting, by the first mobile terminal, the first touch-screen coordinate into the interface coordinate of the interface to be controlled according to the first touch-screen coordinate, a resolution of a touch screen of the first mobile terminal, and a video resolution of the first mobile terminal.

4. The method according to claim 1 or 2, **characterized in that** the step of sending, by the first mobile terminal, the interface coordinate to the second mobile terminal comprises:

   encapsulating, by the first mobile terminal, the interface coordinate into a coordinate message of the H.245 protocol, wherein the coordinate message is used for transmitting the information of the interface coordinate; and
   sending the coordinate message to the second mobile terminal.

5. The method according to claim 1 or 2, **characterized in that** before the step of receiving, by the first mobile terminal, the touch-screen operation to the interface to be controlled sent by a second mobile terminal during a video call, the method further comprises:

performing, by the first mobile terminal and the second mobile terminal, touch-screen information transfer capability exchange using the H.245 protocol, wherein the touch-screen information transfer capability is used for supporting the first mobile terminal and the second mobile terminal to transfer the interface coordinate information; and

confirming that both the first mobile terminal and the second mobile terminal support the touch-screen information transfer capability.

6. A mobile terminal, **characterized by** comprising:

an acquiring module, configured to receive a touch-screen operation to an interface to be controlled, wherein the interface to be controlled is sent by the other mobile terminal during a video call, and acquire a first touch-screen coordinate of the operation;

a first converting module, configured to convert the first touch-screen coordinate into a first interface coordinate of the interface to be controlled; and

a first control module, configured to send the first interface coordinate to the other mobile terminal to control the interface to be controlled.

7. The mobile terminal according to claim 6, **characterized in that** the mobile terminal further comprises:

a receiving module, configured to receive a second interface coordinate sent by the other mobile terminal;

a second converting module, configured to convert the second interface coordinate into a second touch-screen coordinate; and

a second control module, configured to perform operation control to the interface to be controlled of the mobile terminal according to the second touch-screen coordinate.

8. The mobile terminal according to claim 6 or 7, **characterized in that** the first converting module is configured to convert the first touch-screen coordinate into the first interface coordinate of the interface to be controlled according to the first touch-screen coordinate, a resolution of a touch screen of the mobile terminal and a video resolution of the mobile terminal.

9. The mobile terminal according to claim 6 or 7, **characterized in that** the first control module comprises:

an encapsulating module, configured to encapsulate the first interface coordinate into a coordinate message of the H.245 protocol, wherein the coordinate message is used for transferring the information of the interface coordinate; and

a sending module, configured to send the coordinate message to the other mobile terminal to control the interface to be controlled of the other mobile terminal.

10. The mobile terminal according to claim 6 or 7, **characterized in that** the mobile terminal further comprises:

an exchanging module, configured to perform touch-screen information transfer capability exchange with the other mobile terminal using the H.245 protocol, wherein the touch-screen information transfer capability is used for supporting the mobile terminal and the other mobile terminal to transfer interface coordinate information; and

a confirmation module, configured to confirm that both the first mobile terminal and the second mobile terminal support the touch-screen information transfer capability.

| Sequence number | | capability description | | simultaneous capability | | optional capability | | capability entry sequence number |
|---|---|---|---|---|---|---|---|---|
| protocol identification | | | | | | | | |
| multiplexing capability | | capability description | | simultaneous capability | | optional capability | | capability entry sequence number |
| capability table | | | | | | | | |
| capability description set | | capability description | | simultaneous capability | | optional capability | | capability entry sequence number |

**Fig. 1**

| capability name | $\dashrightarrow$ | capability A |
|---|---|---|
| capability type | $\dashrightarrow$ | data, audio, image, etc. |
| capability identifier type | $\dashrightarrow$ | standard |
| capability identifier value | $\dashrightarrow$ | binary number |
| other capability parameters | $\dashrightarrow$ | including: maximum transmission rate, maximum grouping size, etc. |

**Fig. 2**

a first mobile terminal receives a touch-screen operation to an interface to be controlled, wherein the interface to be controlled is sent by a second mobile terminal during a video call, and the first mobile terminal acquires a first touch-screen coordinate of this operation — S102

the first mobile terminal converts the first touch-screen coordinate into an interface coordinate of the interface to be controlled — S104

the first mobile terminal sends the interface coordinate to the second mobile terminal to control the interface to be controlled — S106

**Fig.3**

a second mobile terminal initiates a video call and starts the H.245 call control process with a first mobile terminal — S202

the second mobile terminal performs capability exchange with the first mobile terminal and confirms that both parties support the touch-screen information transfer capability — S204

the second mobile terminal sends an interface to be controlled to the first mobile terminal — S206

the first mobile terminal displays the interface to be controlled and receives an operation of clicking one certain location of the touch screen by a user — S208

the first mobile terminal detects this click and generates a touch-screen coordinate of the touch point — S210

the first mobile terminal judges whether the touch-screen coordinate of this touch point is in the interface to be controlled — S212  NO→ respond to the corresponding operation of this click touch point

YES

the first mobile terminal converts the touch-screen coordinate of this touch point into an interface coordinate of the interface to be controlled — S214

the first mobile terminal sends the interface coordinate to the second mobile terminal — S216

the second mobile terminal receives the interface coordinate and converts it into the touch-screen coordinate of the second mobile terminal — S218

the second mobile terminal responds to this touch-screen coordinate and performs operation to its interface to be controlled — S220

**Fig.4**

a second mobile terminal initiates a video call and starts the H.245 call control process with a first mobile terminal — S302

the first mobile terminal initiates control switch during the video call to perform capability exchange with the second mobile terminal and confirms that both parties support the touch-screen information transfer capability — S304

the second mobile terminal sends an interface to be controlled to the first mobile terminal — S306

the first mobile terminal displays the interface to be controlled and receives a pull operation of a user on the touch screen — S308

the first mobile terminal detects this operation and generates touch-screen coordinates of the pulled starting touch point and the ending touch point — S310

the first mobile terminal converts the touch-screen coordinates of the starting touch point and the ending touch point into the interface coordinates of the interface to be controlled — S312

the first mobile terminal sends the interface coordinates to the second mobile terminal — S314

the second mobile terminal receives the interface coordinates and converts it into the touch-screen coordinates of the second mobile terminal; — S316

the second mobile terminal responds to the touch-screen coordinates of the starting touch point and the ending touch point and performs operation to its interface to be controlled — S318

**Fig.5**

(X0, Y0)

(X1, Y1)

(X, Y)

S402    convert a touch-screen
        coordinate into an
        interface coordinate

convert the LCD
coordinate into the
touch-screen
coordinate

S406

(X2, Y2)

(X3, Y3)

S404

convert the
interface
coordinate
into an
LCD
coordinate

first mobile terminal

second mobile terminal

**Fig.6**

calling
subscriber

videophone
terminal

S502 initiate a VT call

videophone
terminal

called
subscriber

S504 link establishment process of wireless
link, and the link is established successfully

S508 initiate the
H245 session
control process

S506 Mobile level layering process, and the
layering is successful

S508 initiate the
H245 session
control process

S510 send image information

S512 send coordinate information

S514 feed back a confirmation
receiving reply

videophone call
control process,
perform audio
and video
information
exchange

S516 send coordinate
information

videophone call
control process,
perform audio
and video
information
exchange

S518 stop sending location
information messages

S520 the subscriber hangs up the phone, ends the
session process, and destroys the protocol stack
and removes the wireless link

**Fig.7**

| during the video call of A and B, A initiates a control request, and B accepts the request and makes a confirmation | ⌐ S602 |

↓

| the call interfaces of both parties are switched | ⌐ S604 |

↓

| A performs an operation via the touch screen in the master video and transmits the coordinate information of this operation to B via the videophone | ⌐ S606 |

↓

| B receives the coordinate information sent by A and responds to the corresponding operation, and B performs application interface refresh | ⌐ S608 |

↓

| the master video interface of A displays the refreshed application interface of B and repeats the operations of Steps S606 to S608 | ⌐ S610 |

↓

| any one of terminal A or B initiates an end request to end the remote control and restore to the ordinary video call interface | ⌐ S612 |

## Fig.8

exchange module 714

confirmation module 716

acquiring module 702

receiving module 708

first converting module 704

second converting module 710

first control module 706

encapsulating module 7062

sending module 7064

second control module 712

**Fig.9**

## Fig.10

```
┌──────────────────────────────────────┐   ┌──────────────────────────────────────┐
│  ┌──────────┐     ┌──────────┐        │   │  ┌──────────┐     ┌──────────┐        │
│  │videophone│     │videophone│        │   │  │videophone│     │ terminal │        │
│  │   call   │     │ control  │        │   │  │ control  │     │   CPU    │        │
│  │interface │     │  module  │────────┼───┼──│  module  │     │          │        │
│  └──────────┘     └──────────┘        │   │  └──────────┘     └──────────┘        │
│       │                  │            │   │       │                  │            │
│  ┌──────────┐┌──────────┐┌──────────┐ │   │ ┌──────────┐      ┌──────────┐        │
│  │  touch   ││  touch   ││auxiliary │ │   │ │auxiliary │      │  touch   │        │
│  │  screen  ││  screen  ││processing│ │   │ │processing│      │  screen  │        │
│  │ detecting││controller││  module  │ │   │ │  module  │      │controller│        │
│  │apparatus ││          ││          │ │   │ │          │      │          │        │
│  └──────────┘└──────────┘└──────────┘ │   │ └──────────┘      └──────────┘        │
│           first mobile                │   │           second mobile               │
│             terminal                  │   │             terminal                  │
└──────────────────────────────────────┘   └──────────────────────────────────────┘
```

**Fig.10**

## Fig.11

```
┌──────────────────────────────────────┐                ┌──────────────────────────────────────┐
│  ┌──────────┐     ┌──────────┐        │    S910        │  ┌──────────┐     ┌──────────┐        │
│  │videophone│     │videophone│        │ ═══════════►   │  │videophone│     │          │        │
│  │   call   │     │ control  │        │                │  │ control  │     │terminal CPU│      │
│  │interface │     │  module  │        │                │  │  module  │     │          │        │
│  └──────────┘     └──────────┘        │                │  └──────────┘     └──────────┘        │
│       │ S902           ▲ S908         │                │       │ S912           ▲ S916         │
│       ▼                │              │                │       ▼                │              │
│ ┌──────────┐ S904┌──────────┐ S906┌──────────┐         │ ┌──────────┐ S914┌──────────┐         │
│ │touch screen│──►│  touch   │──►│auxiliary │           │ │auxiliary │──►│touch screen│         │
│ │ detecting  │   │  screen  │   │processing│           │ │processing│   │controller│           │
│ │ apparatus  │   │controller│   │  module  │           │ │  module  │   │          │           │
│ └──────────┘     └──────────┘   └──────────┘           │ └──────────┘     └──────────┘         │
│           first mobile terminal                        │          second mobile terminal       │
└──────────────────────────────────────┘                └──────────────────────────────────────┘
```

**Fig.11**

# INTERNATIONAL SEARCH REPORT

| International application No. |
| --- |
| PCT/CN2010/078687 |

## A. CLASSIFICATION OF SUBJECT MATTER

H04W88/04 (2009.01)i

According to International Patent Classification (IPC) or to both national classification and IPC

## B. FIELDS SEARCHED

Minimum documentation searched (classification system followed by classification symbols)

IPC: H04W 88/-; H04Q7/-; G06F3/-

Documentation searched other than minimum documentation to the extent that such documents are included in the fields searched

Electronic data base consulted during the international search (name of data base and, where practicable, search terms used)

CPRSABS VEN CNTXT WOTXT:remote control+ collabor+ cooperat+ mobile portable coordinate? Visual H.245 interface touch resolv+ help shar+ telephone

## C. DOCUMENTS CONSIDERED TO BE RELEVANT

| Category* | Citation of document, with indication, where appropriate, of the relevant passages | Relevant to claim No. |
| --- | --- | --- |
| A | CN1798402A, (LG ELECTRONICS CHINA RES & DEV CENT CO L),05 Jul. 2006 (05.07.2006), the whole document | 1-10 |
| A | CN101594426A, (LG ELECTRONICS INC), 02 Dec. 2009 (02.12.2009), the whole document | 1-10 |

☐ Further documents are listed in the continuation of Box C.    ☒ See patent family annex.

| | |
| --- | --- |
| *    Special categories of cited documents:<br><br>"A"   document defining the general state of the art which is not considered to be of particular relevance<br><br>"E"   earlier application or patent but published on or after the international filing date<br><br>"L"   document which may throw doubts on priority claim (S) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&"document member of the same patent family |
| Date of the actual completion of the international search<br><br>20 Apr. 2011 (20.04.2011) | Date of mailing of the international search report<br><br>**05 May 2011 (05.05.2011)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>LI, Qiong<br><br>Telephone No. (86-10)62411710 |

Form PCT/ISA /210 (second sheet) (July 2009)

<div align="center">

**INTERNATIONAL SEARCH REPORT**
Information on patent family members

</div>

| International application No. |
| --- |
| PCT/CN2010/078687 |

| Patent Documents referred in the Report | Publication Date | Patent Family | Publication Date |
| --- | --- | --- | --- |
| CN1798402A | 05.07.2006 | KR20060078831A | 05.07.2006 |
| | | KR100688177B1 | 02.03.2007 |
| | | CN100394824C | 11.06.2008 |
| CN101594426A | 02.12.2009 | EP2129089A1 | 02.12.2009 |
| | | US2009298469A1 | 03.12.2009 |
| | | KR20090123339A | 02.12.2009 |
| | | KR20090123440A | 02.12.2009 |

Form PCT/ISA /210 (patent family annex) (July 2009)